# EUROPEAN PATENT SPECIFICATION

(11) **EP 3 536 136 B1**
(45) Date of publication and mention of the grant of the patent: **09.12.2020**
(21) Application number: 18160185.7
(22) Date of filing: 06.03.2018
(51) Int. Cl.: A01B 71/06

(54) **METHOD FOR OPERATING AN AGRICULTURAL MACHINE AND AGRICULTURAL MACHINE**
VERFAHREN ZUM BETRIEB EINER LANDWIRTSCHAFTLICHEN MASCHINE UND LANDWIRTSCHAFTLICHE MASCHINE
PROCÉDÉ DE FONCTIONNEMENT D'UNE MACHINE AGRICOLE ET MACHINE AGRICOLE

(43) Date of publication of application: 11.09.2019
(73) Proprietor: Kverneland Group Mechatronics BV, 2153 LR Nieuw-Vennep (NL)
(72) Inventor: JACOBS, Jeroen, 2402 EL Alphen aan den Rijn (NL); NIELSEN, Rasmus Elmelund, 5892 Gudbjerg (DK)
(74) Representative: Bittner, Thomas L.

(56) References cited:
- EP-A1- 3 205 192
- EP-A1- 3 207 783
- DE-A1-102014 211 474
- DE-A1-102016 118 203
- US-A1- 2017 055 432

## Description

The invention refers to a method for operating an agricultural machine and agricultural machine.

### Background

An agricultural machine may be having a tractor, and an implement trailed by or carried by the tractor. Modern agricultural machines are provided with a user terminal located in the tractor. The user terminal allows the user to input user input for operating the agricultural machine. A machine control system may be provided which is connected to the user terminal. By the machine control system functional elements provided either on the tractor or the implement may be controlled for operation.

Machine control systems have been proposed in which user input is received through the user terminal. If the user input refers to an operation task for a functional tractor element, the user input may be provided to a tractor control unit assigned to one or more functional tractor elements to be controlled by control signals generated in the tractor control unit. If the user input refers to controlling operation of the functional implement element provided on the implement, the user input is provided to an implement controller provided on the implement and configured to control operation of one or more functional implement elements. Data communication is conducted by means of a data communication assembly connecting to the user terminal, the tractor control unit, and the implement control unit.

Further, so called tractor-implement managements (TIM) have been proposed. It allows the implement controller to submit control signals in response to detecting operation information data referring to the operation of one or more functional implement elements to the tractor control unit. In response, the tractor control unit will adjust the operation mode of one or more of the functional tractor elements. For example, in response to the control signals received from the implement controller, the tractor controller unit may generate control signals for lowering travel speed of the tractor.

Document EP 3 207 783 A1 refers to an agricultural system having a tractor and an implement and a method of operating. A driveline is provided between a driving device of the tractor and a first functional element of the implement, the driveline comprising a tractor driveline and an implement driveline connected through a power take-off connection. A driving force is provided to the first functional element of the implement through the driveline in a first mode of operation, thereby, a working toll rotating in a first direction in response to the driving force. An operation problem is detected for the first functional element by a sensor provided in a tractor-implement control system. Reverse control signals are generated in a tractor controller provided in the tractor-implement control system in response to the detecting of the operation problem for the first functional element. A direction of rotation of the drive output shaft of the tractor power take-off is reversed in response to the providing of the reverse control rights in the tractor controller in a second mode of operation, thereby, rotating the working tool of the first functional element in a second direction which is opposite to the first direction.

### Summary

It is an object to provide a method for operating an agricultural machine and an agricultural machine which allow for improved operation control.

For solving the object a method for operating an agricultural machine and an agricultural machine according to claims 1 and 12, respectively, is provided. Further embodiments are disclosed in dependent claims.

According to an aspect, a method for operating an agricultural machine is provided, the agricultural machine having a tractor, an implement trailed or carried by the tractor, an user terminal provided on the tractor, and a machine control system connected to the user terminal. The method comprises, in a first operation: receiving a first user input through the user terminal, the first user input indicating a first operation task to be executed by a functional implement element provided on the implement; receiving the first user input in the tractor control unit; in response to receiving the first user input, generating first driving signals by the tractor control unit, the first driving signals configured to drive operation of the functional implement element for executing the first operation task; transmitting, through a data communication assembly, the first driving signals from the tractor control unit to a local driver unit provided on the implement and assigned to the functional implement element; in response to receiving the first driving signals, driving the functional implement element by the local driver unit, and the functional implement element executing the first operation task.

According to another aspect, an agricultural machine is provided, the agricultural machine comprising: a tractor; a functional tractor element provided on the tractor and configured to execute operation tasks; an implement trailed or carried by the tractor; a functional implement element provided on the implement and configured to execute operation tasks; an user terminal provided on the tractor; and a machine control system connected to the user terminal. The machine control system is having a tractor control unit provided on the tractor and connected to the user terminal; a local driver unit provided on the implement and assigned to the functional implement element; and a data communication assembly connecting the tractor control unit and the local driver unit. The machine control system is configured to, in a first operation: receive a first user input through the user terminal, the first user input indicating a first operation task to be executed by a functional implement element provided on the implement; receive the first user input in the tractor control unit; in response to the first user input, generate first driving signals by the tractor control unit, the driving signals configured to drive operation of the functional implement element for executing the first operation task; transmit, through the data communication assembly, the first driving signals from the tractor control unit to a local driver unit provided on the implement and assigned to the functional implement element; and, in response to receiving the first driving signals, drive the functional implement element by the local driver unit, and have the functional implement element executing the first operation task.

According to the technology proposed, the functional implement element is driven for operation by first driving signals generated in the tractor control unit, but not in an implement control unit which, however, optionally may be provided on the implement. The first user input referring to operation of the functional implement element is received in the tractor control unit and processed by the tractor control unit for generating the first driving signals in the tractor control unit. Following, the first driving signals are transmitted from the tractor control unit, through the data communication assembly, to the local driver unit provided on the implement and assigned to the functional implement element. In response to receiving the first driving signals, the first driving signals are processed (for driving) in the local driver unit on the implement. The functional implement element is driven by the local driver unit, and, in response, is executing the first operation task. In conclusion, the tractor control unit provided on the tractor provides for the first driving signals to be applied for operating the functional implement element. It allows for a simpler and cheaper configuration and implementation of the local driver unit provided on the implement, since the driving signals for driving operation of the functional implement element are not to be generated locally on the implement, but by the tractor control unit provided on the tractor. Only processing of the first driving signals received (for driving) is to be conducted by the local driver unit, thereby, actually driving the functional implement element.

In response to the user input through the user terminal, input signals may be provided. The input signals may indicate which button from a plurality of buttons was pressed by the user for input. The input signals are received in the tractor control unit.

The machine control system which may also be referred to machine control network may be configured to prevent the user input for controlling operation of the functional implement element from being provided directly from the user terminal to the local driver unit located on the implement. The local driver unit, because of its hardware and / or software design, shall not be able to process such user control input locally by processing the input signals. Any user input referring to operation of the functional implement element may be forced to be processed (for driving signal generation) by the tractor control unit. Because of the implementation, namely its hardware and / or software design, the local driver unit is prevented from processing input signals for actually operating the functional implement element.

The tractor control unit may be provided in a tractor-implement management (TIM) system. At least one of the functional implement elements to which the local driver unit is assigned and / or one other functional implement element provided on the implement may be provided with a sensor element which is configured to detect sensor signals with respect to an operation parameter of the functional implement and submit the sensor signals to the tractor control unit and / or some other control unit provided on the tractor and assigned to the tractor-implement management system. The tractor control unit provided in the tractor-implement management system will process the sensor signals received from the implement and adjust operation of the tractor, for example, by increasing or decreasing travel speed of the tractor.

The executing of the first operation task may comprise a working tool executing the first operation task.

The executing of the first operation task may comprise relocating the functional implement element from a first operation position to a second operation position different from the first operation position.

The method may further comprise implementing the data communication assembly according to the standard ISO 11783.

The method may further comprise, in a second operation: receiving a second user input through the user terminal, the second user input indicating a second operation task to be executed by a functional tractor element provided on the tractor; receiving the second user input in the tractor control unit; in response to the second user input, generating first control signals by the tractor control unit, the first control signals configured to control operation of the functional tractor element for executing the second operation task; receiving the first control signals in an electronic control unit assigned to the functional tractor element; and applying the first control signals by the electronic control unit, and the functional tractor element executing the second operation task. The method may further comprise conducting the first and second operation at least in part simultaneously.

With regard to the method, the applying may comprise the following: in response to the receiving of the first control signals, generating second driving signals by the electronic control unit, the second driving signals configured to drive operation of the functional tractor element for executing the second operation task; applying the second driving signals by the electronic control unit; and the functional tractor element executing the second operation task. The electronic control unit may comprise a local driver element or unit configured to generate the second driving signals. The second driving signal may be processed by the local driver element or unit for providing driving power signals such as driving voltage to be applied for operating the functional tractor element.

The driving, in the local driver unit, may comprise the following: in response to the driving signals, generating at least one driving power configured to drive the functional implement element for executing the second operation task; and applying the at least one driving power to the functional implement element for executing the first operation task. The local driver unit assigned to the functional implement element may be configured to provide a plurality of different driving voltages. The plurality of driving voltages may comprise at least one of AC driving voltage and DC driving voltage. In another embodiment, the generating may comprise generating a plurality of turn-on and turn-off driving signals configured to turn-on and turn-off the functional implement element. The driving power can also be provided as a pulse width modulation output.

The method may further comprise, prior to the first operation, establishing a data communication connection between the tractor control unit and the local driver unit through the data communication assembly, and, in response to the establishing, providing driver unit configuration data in the tractor control unit, the driver unit configuration data indicating one or more driving signals the local driver unit provided on the implement is configured to process for driving the functional implement element. The driver unit configuration data may be transmitted from the local driver unit to the tractor control unit. Alternatively or in addition, some identification (number) may be transmitted from the local driver unit to the tractor control unit for identifying the local driver unit. In the tractor control unit, in response to receiving the identification, the driver unit configuration data may be provided, for example, received from a server providing information about different configurations of local driver units. Providing the driver unit configuration data in the tractor control unit allows the tractor control unit to generate driving signals compatible with the design or the configuration of the local driver unit, thereby, ensuring correct functioning of the local driver unit in response to the first driving signals received from the tractor control unit.

The method may further comprise, prior to the first operation, establishing the data communication connection between the tractor control unit and the local driver unit through the data communication assembly, and, in response to the establishing, providing tractor control unit configuration data in the local driver unit, the tractor control unit configuration data indicating one or more driving signals the tractor control unit is configured to provide to the local driver unit. In the local driver unit a plurality of different operation configurations may be provided. In response to receiving the tractor control unit configuration data, one of the operation configurations may be selected, thereby, securing correct functionality of the local driver unit in response to the first driving signals to be received from the tractor control unit.

The method may further comprise, in a third operation, receiving a third user input through the user terminal, the third user input indicating a third operation task to be executed by a further functional tractor element provided on the tractor and being different from the functional tractor element; receiving the third user input in the tractor control unit; in response to the third user input, generating third driving signals by the tractor control unit, the third driving signals configured to control operation of the further functional tractor element for executing the third operation task; and applying the third driving signals, and, in response to the applying, the further functional tractor element executing the third operation task.

The method may further comprise, in a fourth operation, receiving a fourth user input through the user terminal, the fourth user input indicating a fourth operation task to be executed by a further functional implement element provided on the implement and being different from the functional implement element; receiving the fourth user input in the tractor control unit; in response to the fourth user input, generating fourth driving signals by the tractor control unit, the fourth control signals configured to control operation of the further functional implement element for executing the fourth operation task; transmitting, through a data bus assembly, the fourth control signals from the tractor control unit to a further local driver unit provided on the implement and assigned to the further functional implement element; in response to receiving the fourth control signals, generating driving signals by the further local driver unit, the driving signals configured to drive the further functional implement element for executing the fourth operation task; and applying the driving signals, and, in response to the applying, the further functional implement element executing the fourth operation task.

With regard to the agricultural machine, the aspects outlined above in respect of the method of operating may apply *mutatis mutandis.*

### Description of further embodiments

Following, further embodiments are described by reference to figures. In the figures, show:
- Fig. 1: a schematic representation of an agricultural machine having a tractor and an implement trailed or carried by the tractor;
- Fig. 2: a schematic representation of a first part of a method for operating the agricultural machine; and
- Fig. 3: a schematic representation of a second part of the method for operating the agricultural machine.

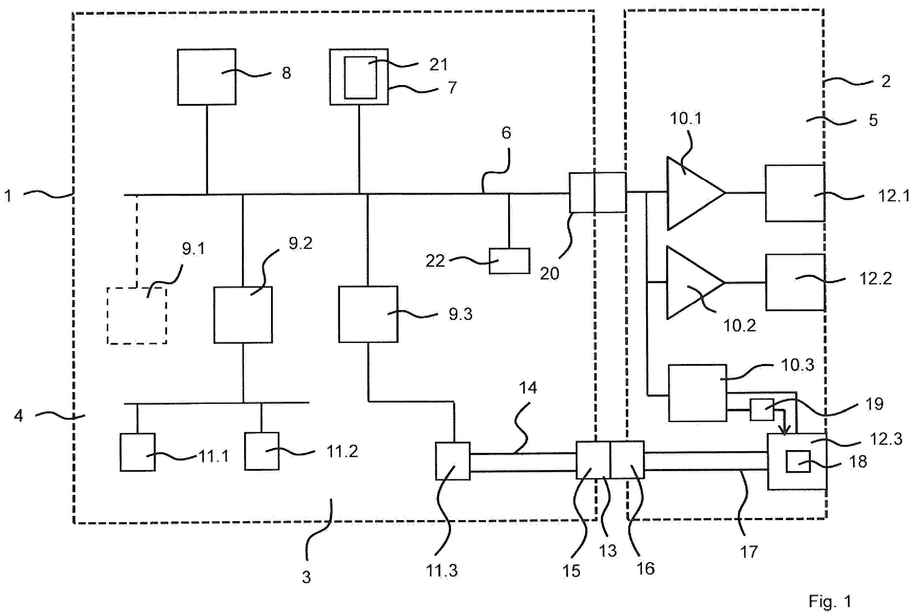

Fig. 1 shows a schematic representation of an agricultural machine or system having a tractor 1 and an implement 2 trailed / towed or carried by the tractor 1.

An control system 3 which may also referred to as agricultural machine control network provides for an electronic control system of the agricultural machine. The machine control system 3 comprises a tractor control network 4 and an implement control network 5. The machine control system 3 is having a data bus 6 (which, in general, may be provided as a data communication assembly) to which a user terminal 7, a tractor controller 8, and a plurality of electronic control units 9.1, ..., 9.3 provided on the tractor 1 and a plurality of local driver units 10.1, 10.2 provided on the implement 2 are connected. Each of the electronic control units 9.1, ..., 9.3 is assigned to a functional tractor element 11.1, ..., 11.3 provided in the tractor 1. Each of the local driver units 10.1, 10.2 is assigned to a functional implement element 12.1, 12.2 provided on the implement 2. The local driver units 10.1, 10.2 are configured to drive the respective functional implement element 12.1, 12.2 for executing operation tasks.

With regard to the implement 2, at least some of the functional implement elements 12.1, ..., 12.3 may be provided with a working tool.

The functional tractor element 11.3 provided in the tractor 1 is a functional element or unit providing a driving force to a tractor power take-off 13 which is connected to the functional tractor element 11.3 through a tractor driveline 14. With regard to the tractor power take-off 13, a drive output shaft 15 of the tractor 1 is connected to a drive input shaft 16 of an implement driveline 17. The implement driveline 17 is transmitting the driving force to the functional implement element 12.3 for driving a working tool 18 of the functional implement element 12.3. Operation of the functional implement element 12.3 is controlled by an electronic control unit 10.3 of the implement 2.

A sensor 19 is provided for monitoring operation of the functional implement element 12.3, e.g. operation of the working tool 18. The sensor, according to the embodiment in Fig. 1, is connected to the electronic control unit 10.3 for transmitting sensor signals.

Through the data bus 6 electronic data may be transmitted between the components, units, modules or elements connected to the data bus 6. The electronic control system of the machine control system 3 may implement one or more parts of the ISO 11783 standard.

The data bus 6 is provided with a plug connector 20 connecting the tractor control network 4 and the implement control network 5.

The user or operator terminal 7 is provided with a terminal display 21 and provides for user control and user display. Further, the user terminal 7 is provided with a processor unit comprising a processor and a memory element connected to the processor. Multiple software applications implemented on the user terminal may be running simultaneously.

Through the user terminal 7 user input may be received for controlling the functional tractor elements 11.1, ..., 11.3 and the functional implement elements 12.1, ..., 12.3 of the agricultural machine or system. Also, through the terminal display 21 operation information may be displayed to the user.

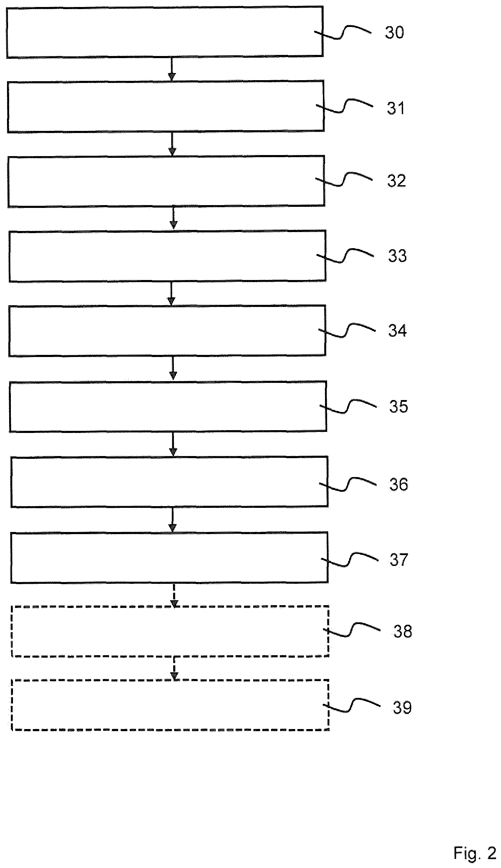

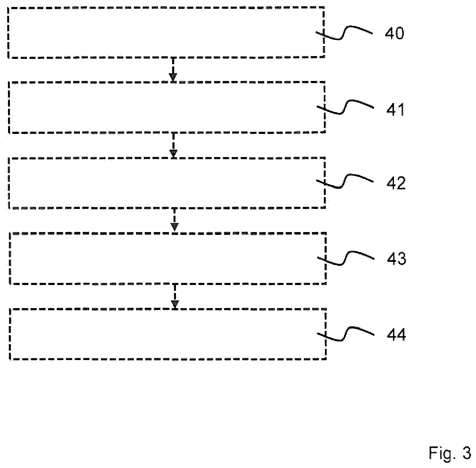

Fig. 2 and 3 shows a schematic representation of a method for operating the agricultural machine 1. In step 30, in a first operation, a first user input is received through the user terminal 7. The first user input is indicating a first operation task to be executed by one of the functional tractor elements 11.1, ..., 11.3 provided on the tractor 1. The first user input is received in the tractor control unit 8 in step 31. The tractor controller 8 may also be referred to as tractor control unit, the tractor controller 8, for example, being configured to receive user input through the user terminal 7 and generate data or input signals in response to the user input. In response to the first user input, first driving signals are generated by the tractor controller 8 (step 32). The first driving signals are configured to drive operation of the functional implement elements 12.1 for executing the first operation task. Following, in step 33 the first driving signals are transmitted through the data bus 6 from the tractor controller 8 to the local driver unit 10.1 provided on the implement 2. In response to receiving the first driving signals (step 34), the first driving signals are processed in the local driver unit 10.1 in step 35. The functional implement element 12.1 is driven by the local driver unit 10.1. in step 36. In response, in step 37 the functional implement element is executing the first operation task.

In a second operation which may optionally follow to the first operation, in step 38, a second user input is received through the user terminal 7. The second user input is indicating a second operation task to be executed by one of the functional tractor elements 11.1, ..., 11.3 provided on the tractor 1. The second user input is received in the tractor controller 8 (step 39). In response to the second user input, control signals are generated by the tractor controller 8 in step 40. The control signals are configured to control operation of the one of the functional tractor elements 11.1, ..., 11.3 for executing the second operation task. Following, in step 41 the control signals are transmitted through the data bus 6 from the tractor controller 8 to at least one of the electronic control units 9.1, ..., 9.3 provided on tractor 1. In response to receiving the second control signals (step 42), driving signals are generated by the electronic control unit(s) 9.1, ..., 9.3. The driving signals are configured to drive the one of the functional tractor elements 11.1, ..., 11.3 for executing the second operation task. In step 43 the driving signals are applied to the one of the functional tractor elements 11.1, ..., 11.3. In response, the one of the functional tractor elements 11.1, ..., 11.3 is executing the second operation task (step 44).

While the first and second operations are depicted as consecutive operations in the embodiment in Fig. 2 and 3, the first and second operations at least in part may be conducted or executed simultaneously. For example, the control signals and the first driving signals may be generated at the same time by the tractor controller 8 after the first and second user inputs have been received. The tractor controller 8 may apply a first and second weight to a first and second operation task, thereby, establishing weighting between the two operations tasks. An operation task assigned higher weight may be performed or conducted first. Following, after the first operation task is executed in part or completely, the second operation task may be conducted. Similarly, the generation of the first control signals and the driving signals may be weighted in the tractor controller. By the weighting of the tasks prioritizing of the tasks can be implemented.

## Claims

1. A method for operating an agricultural machine having a tractor (1). an implement (2) trailed or carried by the tractor (1), an user terminal (7) provided on the tractor (1), and a machine control system connected to the user terminal (7), the method comprising, in a first operation:
- receiving a first user input through the user terminal (7), the first user input indicating a first operation task to be executed by a functional implement element (12.1, 12.2) provided on the implement (2); and
- receiving the first user input in the tractor control unit (8);
**characterized by**
- in response to the first user input, generating first driving signals by the tractor control unit (8), the first driving signals configured to drive operation of the functional implement element (12.1, 12.2) for executing the first operation task;
- transmitting, through a data communication assembly (6), the first driving signals from the tractor control unit (8) to a local driver unit (10.1, 10.2) provided on the implement (2) and assigned to the functional implement element (12.1, 12.2); and
- in response to receiving the first driving signals, driving the functional implement element (12.1, 12.2) by the local driver unit (10.1, 10.2), and, the functional implement element (12.1, 12.2) executing the first operation task.

2. The method according to claim 1, further comprising providing the tractor control unit (8) in a tractor-implement management system.

3. The method according to claim 1 or 2, wherein the executing of the first operation task comprises a working tool executing the first operation task.

4. The method according to at least one of the preceding claims, wherein the executing of the first operation task comprises relocating the functional implement element (12.1, 12.2) from a first operation position to a second operation position different from the first operation position.

5. The method according to at least one of the preceding claims, further comprising, in a second operation,
- receiving a second user input through the user terminal (7), the second user input indicating a second operation task to be executed by a functional tractor element (11.1, .., 11.3) provided on the tractor (1);
- receiving the second user input in the tractor control unit (8);
- in response to the second user input, generating first control signals by the tractor control unit (8), the first control signals configured to control operation of the functional tractor element (11.1, .., 11.3) for executing the second operation task;
- receiving the first control signals in an electronic control unit assigned to the functional tractor element (11.1, .., 11.3); and
- applying the first control signals by the electronic control unit, and the functional tractor element (11.1, .., 11.3) executing the second operation task.

6. The method according to claim 5, wherein the applying comprises
- in response to the receiving of the first control signals, generating second driving signals by the electronic control unit, the second driving signals configured to drive operation of the functional tractor element (11.1, .., 11.3) for executing the second operation task;
- applying the second driving signals by the electronic control unit; and
- the functional tractor element (11.1, .., 11.3) executing the second operation task.

7. The method according to at least one of the preceding claims, wherein the driving, in the local driver unit (10.1, 10.2), comprises
- in response to receiving the first driving signals, generating at least one driving power configured to drive the functional implement element (12.1, 12.2) for executing the second operation task; and
- applying the at least one driving power to the functional implement element (12.1, 12.2) for executing the first operation task.

8. The method according to at least one of the preceding claims, further comprising
- prior to the first operation, establishing a data communication connection between the tractor control unit (8) and the local driver unit (10.1, 10.2) through the data communication assembly (6); and
- in response to the establishing, providing driver unit configuration data in the tractor control unit (8), the driver unit configuration data indicating one or more driving signals the local driver unit (10.1, 10.2) provided on the implement (2) is configured to process for driving the functional implement element (12.1, 12.2).

9. The method according to at least one of the preceding claims, further comprising
- prior to the first operation, establishing the data communication connection between the tractor control unit (8) and the local driver unit (10.1, 10.2) through the data communication assembly (6); and
- in response to the establishing, providing tractor control unit configuration data in the local driver unit (10.1, 10.2), the tractor control unit (8) configuration data indicating one or more driving signals the tractor control unit (8) is configured to provide to the local driver unit (10.1, 10.2).

10. The method according to at least one of the preceding claims, further comprising, in a third operation,
- receiving a third user input through the user terminal (7), the third user input indicating a third operation task to be executed by a further functional tractor element (11.1, .., 11.3) provided on the tractor (1) and being different from the functional tractor element (11.1, .., 11.3);
- receiving the third user input in the tractor control unit (8);
- in response to the third user input, generating third driving signals by the tractor control unit (8), the third driving signals configured to control operation of the further functional tractor element (11.1, .., 11.3) for executing the third operation task; and
- applying the third driving signals, and, in response to the applying, the further functional tractor element (11.1, .., 11.3) executing the third operation task.

11. The method according to at least one of the preceding claims, further comprising, in a fourth operation,
- receiving a fourth user input through the user terminal (7), the fourth user input indicating a fourth operation task to be executed by a further functional implement element (12.2, 12.1) provided on the implement (2) and being different from the functional implement element (12,1, 12.2);
- receiving the fourth user input in the tractor control unit (8);
- in response to the fourth user input, generating fourth driving signals by the tractor control unit (8), the fourth control signals configured to control operation of the further functional implement element (12.2, 12.1) for executing the fourth operation task;
- transmitting, through a data bus assembly, the fourth control signals from the tractor control unit (8) to a further local driver unit (10.2, 10.1) provided on the implement and assigned to the further functional implement element (12.2, 12.1);
- in response to receiving the fourth control signals, generating driving signals by the further local driver unit (10.2, 10.1), the driving signals configured to drive the further functional implement element (12.2, 12.1) for executing the fourth operation task; and
- applying the driving signals, and, in response to the applying, the further functional implement element (12.2, 12.1) executing the fourth operation task.

12. An agricultural machine, comprising
- a tractor;
- a functional tractor element provided on the tractor and configured to execute operation tasks;
- an implement trailed or carried by the tractor;
- a functional implement element (12.1, 12.2) provided on the implement and configured to execute operation tasks;
- an user terminal (7) provided on the tractor; and
- a machine control system connected to the user terminal (7) and having
- a tractor control unit (8) provided on the tractor and connected to the user terminal (7);
- a local driver unit (10.1, 10.2) provided on the implement and assigned to the functional implement element (12.1, 12.2); and
- a data communication assembly (6) connecting the tractor control unit (8) and the local driver unit (10.1, 10.2);
wherein the machine control system is configured, in a first operation, to
- receive a first user input through the user terminal (7), the first user input indicating a first operation task to be executed by a functional implement element (12.1, 12.2) provided on the implement (2);
- receive the first user input in the tractor control unit (8);
- in response to the first user input, generate first driving signals by the tractor control unit (8), the first driving signals configured to drive operation of the functional implement element (12.1, 12.2) for executing the first operation task;
- transmit, through the data communication assembly (6), the first driving signals from the tractor control unit (8) to a local driver unit (10.1, 10.2) provided on the implement (2) and assigned to the functional implement element (12.1, 12.2); and
- in response to receiving the first driving signals, drive the functional implement element (12.1, 12.2) by the local driver unit (10.1, 10.2), and have the functional implement element (12.1, 12.2) executing the first operation task.

## Patentansprüche

1. Verfahren zum Betreiben einer landwirtschaftlichen Maschine, die einen Traktor (1), ein von dem Traktor (1) gezogenes oder getragenes Gerät (2), ein an dem Traktor (1) vorgesehenes Benutzerterminal (7) und ein mit dem Benutzerterminal (7) verbundenes Maschinensteuerungssystem aufweist, wobei das Verfahren in einem ersten Betrieb Folgendes umfasst:
- Empfangen einer ersten Benutzereingabe über das Benutzerterminal (7), wobei die erste Benutzereingabe eine erste Betriebsaufgabe anzeigt, die von einem funktionalen Geräteelement (12.1, 12.2) ausgeführt werden soll, das an dem Gerät (2) vorgesehen ist; und
- Empfangen der ersten Benutzereingabe in der Traktorsteuereinheit (8); **gekennzeichnet durch**,
- als Reaktion auf die erste Benutzereingabe, Erzeugen erster Antriebssignale durch die Traktorsteuereinheit (8), wobei die ersten Antriebssignale konfiguriert sind, den Betrieb des funktionalen Geräteelements (12.1, 12.2) zum Ausführen der ersten Betriebsaufgabe anzutreiben;
- Übertragen der ersten Antriebssignale von der Traktorsteuereinheit (8) über eine Datenkommunikationsanordnung (6) an eine lokale Treibereinheit (10.1, 10.2), die an dem Gerät (2) vorgesehen und dem funktionalen Geräteelement (12.1, 12.2) zugeordnet ist; und
- als Reaktion auf das Empfangen der ersten Antriebssignale, Antreiben des funktionalen Geräteelements (12.1, 12.2) durch die lokale Treibereinheit (10.1, 10.2) und wobei das funktionale Geräteelement (12.1, 12.2) die erste Betriebsaufgabe ausführt.

2. Verfahren nach Anspruch 1, ferner umfassend das Bereitstellen der Traktorsteuereinheit (8) in einem Traktor-Geräte-Verwaltungssystem.

3. Verfahren nach Anspruch 1 oder 2, wobei das Ausführen der ersten Betriebsaufgabe umfasst, dass das Arbeitswerkzeug die erste Betriebsaufgabe ausführt.

4. Verfahren nach mindestens einem der vorhergehenden Ansprüche, wobei das Ausführen der ersten Betriebsaufgabe ein Verlagern des funktionalen Geräteelements (12.1, 12.2) von einer ersten Betriebsposition in eine zweite Betriebsposition, die sich von der ersten Betriebsposition unterscheidet, umfasst.

5. Verfahren nach mindestens einem der vorhergehenden Ansprüche, ferner umfassend in einem zweiten Betrieb
- Empfangen einer zweiten Benutzereingabe über das Benutzerterminal (7), wobei die zweite Benutzereingabe eine zweite Betriebsaufgabe anzeigt, die von einem funktionalen Traktorelement (11.1,..,11.3) ausgeführt werden soll, das auf dem Traktor (1) vorgesehen ist;
- Empfangen der zweiten Benutzereingabe in der Traktorsteuereinheit (8);
- als Reaktion auf die zweite Benutzereingabe, Erzeugen erster Steuersignale durch die Traktorsteuereinheit (8), wobei die ersten Steuersignale konfiguriert sind, den Betrieb des funktionalen Traktorelements (11.1,..,11.3) zum Ausführen der zweiten Betriebsaufgabe zu steuern;
- Empfangen der ersten Steuersignale in einer elektronischen Steuereinheit, die dem funktionalen Traktorelement (11.1,.., 11.3) zugeordnet ist; und
- Anwenden der ersten Steuersignale durch die elektronische Steuereinheit, und wobei das funktionale Traktorelement (11.1,.., 11.3) die zweite Betriebsaufgabe ausführt.

6. Verfahren nach Anspruch 5, wobei das Anwenden Folgendes umfasst:
- als Reaktion auf das Empfangen der ersten Steuersignale, Erzeugen zweiter Antriebssignale durch die elektronische Steuereinheit, wobei die zweiten Antriebssignale konfiguriert sind, den Betrieb des funktionalen Traktorelements (11.1,..,11.3) zum Ausführen der zweiten Betriebsaufgabe anzutreiben;
- Anwenden der zweiten Antriebssignale durch die elektronische Steuereinheit; und
- Ausführen der zweiten Betriebsaufgabe durch das funktionale Traktorelement (11.1,..,11.3).

7. Verfahren nach mindestens einem der vorhergehenden Ansprüche, wobei das Antreiben in der lokalen Treibereinheit (10.1, 10.2) Folgendes umfasst:
- als Reaktion auf das Empfangen der ersten Antriebssignale, Erzeugen mindestens einer Antriebsleistung, die konfiguriert ist, das funktionale Geräteelement (12.1, 12.2) zum Ausführen der zweiten Betriebsaufgabe anzutreiben; und
- Anwenden der mindestens einen Antriebsleistung an das funktionale Geräteelement (12.1, 12.2) zum Ausführen der ersten Betriebsaufgabe.

8. Verfahren nach mindestens einem der vorhergehenden Ansprüche, ferner umfassend
- vor dem ersten Betrieb, Aufbauen einer Datenkommunikationsverbindung zwischen der Traktorsteuereinheit (8) und der lokalen Treibereinheit (10.1, 10.2) durch die Datenkommunikationsanordnung (6); und
- als Reaktion auf das Aufbauen, Bereitstellen von Konfigurationsdaten für die Treibereinheit in der Traktorsteuereinheit (8), wobei die Konfigurationsdaten für die Treibereinheit ein oder mehrere Antriebssignale anzeigen, zu deren Verarbeitung die an dem Gerät (2) vorgesehene lokale Treibereinheit (10.1, 10.2), zum Antreiben des funktionalen Geräteelements (12.1, 12.2) konfiguriert ist.

9. Verfahren nach mindestens einem der vorhergehenden Ansprüche, ferner umfassend
- vor dem ersten Betrieb, Aufbauen der Datenkommunikationsverbindung zwischen der Traktorsteuereinheit (8) und der lokalen Treibereinheit (10.1, 10.2) über die Datenkommunikationsanordnung (6); und
- als Reaktion auf das Aufbauen, Bereitstellen von Konfigurationsdaten für die Traktorsteuereinheit in der lokalen Treibereinheit (10.1, 10.2), wobei die Konfigurationsdaten für die Traktorsteuereinheit (8) ein oder mehrere Antriebssignale anzeigen, zu deren Bereitstellung an die lokale Treibereinheit (10.1, 10.2) die Traktorsteuereinheit (8) konfiguriert ist.

10. Verfahren nach mindestens einem der vorhergehenden Ansprüche, ferner umfassend in einem dritten Betrieb
- Empfangen einer dritten Benutzereingabe über das Benutzerterminal (7), wobei die dritte Benutzereingabe eine dritte Betriebsaufgabe anzeigt, die von einem weiteren funktionalen Traktorelement (11.1,..,11.3) ausgeführt werden soll, das auf dem Traktor (1) vorgesehen ist und sich von dem funktionalen Traktorelement (11.1,..,11.3) unterscheidet;
- Empfangen der dritten Benutzereingabe in der Traktorsteuereinheit (8);
- als Reaktion auf die dritte Benutzereingabe, Erzeugen dritter Antriebssignale durch die Traktorsteuereinheit (8), wobei die dritten Antriebssignale konfiguriert sind, den Betrieb des weiteren funktionalen Traktorelements (11.1,..,11.3) zum Ausführen der dritten Betriebsaufgabe zu steuern; und
- Anwenden der dritten Antriebssignale und als Reaktion auf das Anwenden, Ausführen der dritten Betriebsaufgabe durch das weitere funktionale Traktorelement (11.1,..,11.3).

11. Verfahren nach mindestens einem der vorhergehenden Ansprüche, ferner umfassend in einem vierten Betrieb
- Empfangen einer vierten Benutzereingabe über das Benutzerterminal (7), wobei die vierte Benutzereingabe eine vierte Betriebsaufgabe anzeigt, die von einem weiteren funktionalen Geräteelement (12.2, 12.1) ausgeführt werden soll, das auf dem Gerät (2) vorgesehen ist und sich von dem funktionalen Geräteelement (12.1, 12.2) unterscheidet;
- Empfangen der vierten Benutzereingabe in der Traktorsteuereinheit (8);
- als Reaktion auf die vierte Benutzereingabe, Erzeugen von vierten Antriebssignalen durch die Traktorsteuereinheit (8), wobei die vierten Steuersignale konfiguriert sind, den Betrieb des weiteren funktionalen Geräteelements (12.2, 12.1) zum Ausführen der vierten Betriebsaufgabe zu steuern;
- Übertragen der vierten Steuersignale von der Traktorsteuereinheit (8) über eine Datenbusanordnung an eine weitere lokale Treibereinheit (10.2, 10.1), die auf dem Gerät vorgesehen und dem weiteren funktionalen Geräteelement (12.2, 12.1) zugeordnet ist;
- als Reaktion auf das Empfangen der vierten Steuersignale, Erzeugen von Antriebssignalen durch die weitere lokale Treibereinheit (10.2, 10.1), wobei die Antriebssignale konfiguriert sind, das weitere funktionale Geräteelement (12.2, 12.1) zum Ausführen der vierten Betriebsaufgabe anzutreiben; und
- Anwenden der Antriebssignale, und wobei als Reaktion auf das Anwenden, das weitere funktionale Geräteelement (12.2, 12.1) die vierte Betriebsaufgabe ausführt.

12. Landwirtschaftliche Maschine, umfassend
- einen Traktor;
- ein funktionales Traktorelement, das an dem Traktor vorgesehen und für das Ausführen von Betriebsaufgaben konfiguriert ist;
- ein von dem Traktor gezogenes oder getragenes Gerät;
- ein funktionales Geräteelement (12.1, 12.2), das auf dem Gerät vorgesehen und für das Ausführen von Betriebsaufgaben konfiguriert ist;
- ein Benutzerterminal (7), das an dem Traktor vorgesehen ist; und
- ein Maschinensteuerungssystem, das mit dem Benutzerterminal (7) verbunden ist und Folgendes aufweist:
- eine Traktorsteuereinheit (8), die an dem Traktor vorgesehen und mit dem Benutzerterminal (7) verbunden ist;
- eine lokale Treibereinheit (10.1, 10.2), die an dem Gerät vorgesehen und dem funktionalen Geräteelement (12.1, 12.2) zugeordnet ist; und
- eine Datenkommunikationsanordnung (6), die die Traktorsteuereinheit (8) und die lokale Treibereinheit (10.1, 10.2) verbindet;
wobei das Maschinensteuerungssystem in einem ersten Betrieb konfiguriert ist zum
- Empfangen einer ersten Benutzereingabe über das Benutzerterminal (7), wobei die erste Benutzereingabe eine erste Betriebsaufgabe anzeigt, die von einem auf dem Gerät (2) vorgesehenen funktionalen Geräteelement (12.1, 12.2) ausgeführt werden soll;
- Empfangen der ersten Benutzereingabe in der Traktorsteuereinheit (8);
- als Reaktion auf die erste Benutzereingabe, Erzeugen erster Antriebssignale durch die Traktorsteuereinheit (8), wobei die ersten Antriebssignale konfiguriert sind, den Betrieb des funktionalen Geräteelements (12.1, 12.2) zum Ausführen der ersten Betriebsaufgabe anzutreiben;
- Übertragen, über die Datenkommunikationsanordnung (6), der ersten Antriebssignale von der Traktorsteuereinheit (8) an eine lokale Treibereinheit (10.1, 10.2), die auf dem Gerät (2) vorgesehen und dem funktionalen Geräteelement (12.1, 12.2) zugeordnet ist; und
- als Reaktion auf das Empfangen der ersten Antriebssignale, Antreiben des funktionalen Geräteelementn (12.1, 12.2) durch die lokale Treibereinheit (10.1, 10.2) und, Ausführenlassen der ersten Betriebsaufgabe durch das funktionale Geräteelement (12.1, 12.2).

## Revendications

1. Procédé permettant de faire fonctionner une machine agricole ayant un tracteur (1), un outil (2) traîné ou porté par le tracteur (1), un terminal utilisateur (7) disposé sur le tracteur (1), et un système de commande de machine connecté au terminal utilisateur (7), le procédé comprenant, dans une première opération :
- la réception d'une première entrée utilisateur par l'intermédiaire du terminal utilisateur (7), la première entrée utilisateur indiquant une première tâche d'opération à exécuter par un élément fonctionnel d'outil (12.1 12.2) disposé sur l'outil (2) ; et
- la réception de la première entrée utilisateur dans l'unité de commande de tracteur (8) ; **caractérisé par**
- la génération, en réponse à la première entrée utilisateur, de premiers signaux d'entraînement par l'unité de commande de tracteur (8), les premiers signaux d'entraînement étant conçus pour entraîner le fonctionnement de l'élément fonctionnel d'outil (12.1, 12.2) afin d'exécuter la première tâche d'opération ;
- la transmission, par un ensemble de communication de données (6), des premiers signaux d'entraînement de l'unité de commande de tracteur (8) à une unité locale d'entraînement (10.1, 10.2) disposée sur l'outil (2) et associée à l'élément fonctionnel d'outil (12.1, 12,2) ; et
- l'entraînement, en réponse à la réception des premiers signaux de commande, de l'élément fonctionnel d'outil (12.1, 12.2) par l'unité locale d'entraînement (10.1, 10.2), et l'exécution de la première tâche d'opération par l'élément fonctionnel d'outil (12.1, 12.2).

2. Procédé selon la revendication 1, comprenant en outre la disposition de l'unité de commande de tracteur (8) dans un système de gestion d'outil de tracteur.

3. Procédé selon la revendication 1 ou 2, dans lequel l'exécution de la première tâche d'opération comprend un outil de travail exécutant la première tâche d'opération.

4. Procédé selon au moins l'une des revendications précédentes, dans lequel l'exécution de la première tâche d'opération comprend le déplacement de l'élément fonctionnel d'outil (12.1, 12.2) d'une première position de fonctionnement à une seconde position de fonctionnement différente de la première position de fonctionnement.

5. Procédé selon au moins l'une des revendications précédentes, comprenant en outre, dans une deuxième opération,
- la réception d'une deuxième entrée utilisateur par l'intermédiaire du terminal utilisateur (7), la deuxième entrée utilisateur indiquant une deuxième tâche d'opération à exécuter par un élément tracteur fonctionnel (11.1,.., 11.3) disposé sur le tracteur (1) ;
- la réception de la deuxième entrée utilisateur dans l'unité de commande de tracteur (8) ;
- la génération, en réponse à la deuxième entrée d'utilisateur, de premiers signaux de commande par l'unité de commande de tracteur (8), les premiers signaux de commande étant conçus pour commander le fonctionnement de l'élément tracteur fonctionnel (11.1,.., 11.3) afin d'exécuter la deuxième tâche d'opération ;
- la réception des premiers signaux de commande dans une unité de commande électronique associée à l'élément tracteur fonctionnel (11.1,.., 11.3) ; et
- l'application des premiers signaux de commande par l'unité de commande électronique, et l'exécution de la deuxième tâche d'opération par l'élément tracteur fonctionnel (11.1,.., 11.3).

6. Procédé selon la revendication 5, dans lequel l'application comprend
- la génération, en réponse à la réception des premiers signaux de commande, de deuxièmes signaux d'entraînement par l'unité de commande électronique, les deuxièmes signaux d'entraînement étant conçus pour entraîner le fonctionnement de l'élément tracteur fonctionnel (11.1,.., 11.3) afin d'exécuter la deuxième tâche d'opération ;
- l'application des deuxièmes signaux d'entraînement par l'unité de commande électronique ; et
- l'exécution de la deuxième tâche d'opération par l'élément tracteur fonctionnel (11.1,.., 11.3).

7. Procédé selon au moins l'une des revendications précédentes, dans lequel l'entraînement, dans l'unité locale d'entraînement (10.1, 10.2), comprend
- la génération, en réponse à la réception des premiers signaux d'entraînement, d'au moins une puissance d'entraînement conçue pour entraîner l'élément fonctionnel d'outil (12.1, 12.2) afin d'exécuter la deuxième tâche d'opération ; et
- l'application de l'au moins une puissance d'entraînement à l'élément fonctionnel d'outil (12.1, 12.2) afin d'exécuter la première tâche d'opération.

8. Procédé selon au moins l'une des revendications précédentes, comprenant en outre
- l'établissement, avant la première opération, d'une connexion de communication de données entre l'unité de commande de tracteur (8) et l'unité locale d'entraînement (10.1, 10.2) par l'intermédiaire de l'ensemble de communication de données (6) ; et
- la disposition, en réponse à l'établissement, de données de configuration d'unité d'entraînement dans l'unité de commande de tracteur (8), les données de configuration d'unité d'entraînement indiquant un ou plusieurs signaux d'entraînement que l'unité locale d'entraînement (10.1, 10.2) disposée sur l'outil (2) est destinée à traiter pour entraîner l'élément fonctionnel d'outil (12.1, 12.2).

9. Procédé selon au moins l'une des revendications précédentes, comprenant en outre
- l'établissement, avant la première opération, de la connexion de communication de données entre l'unité de commande de tracteur (8) et l'unité locale d'entraînement (10.1, 10.2) par l'intermédiaire de l'ensemble de communication de données (6) ; et
- la disposition, en réponse à l'établissement, de données de configuration d'unité de commande de tracteur dans l'unité locale d'entraînement (10.1, 10.2), les données de configuration de l'unité de commande de tracteur (8) indiquant un ou plusieurs signaux d'entraînement que l'unité de commande de tracteur (8) est destinée à fournir à l'unité locale d'entraînement (10.1, 10.2).

10. Procédé selon au moins l'une des revendications précédentes, comprenant en outre, dans une troisième opération,
- la réception d'une troisième entrée utilisateur par l'intermédiaire du terminal utilisateur (7), la troisième entrée utilisateur indiquant une troisième tâche d'opération à exécuter par un autre élément tracteur fonctionnel (11.1,.., 11.3) disposé sur le tracteur (1) et différent de l'élément tracteur fonctionnel (11.1,.., 11.3) ;
- la réception de la troisième entrée utilisateur dans l'unité de commande de tracteur (8) ;
- la génération, en réponse à la troisième entrée utilisateur, de troisièmes signaux d'entraînement par l'unité de commande de tracteur (8), les troisièmes signaux d'entraînement étant conçus pour commander le fonctionnement de l'autre élément tracteur fonctionnel (11.1,.., 11.3) afin d'exécuter la troisième tâche d'opération ; et
- l'application des troisièmes signaux d'entraînement et, en réponse à l'application, l'exécution de la troisième tâche d'opération par l'autre élément tracteur fonctionnel (11.1,.., 11.3).

11. Procédé selon au moins l'une des revendications précédentes, comprenant en outre, dans une quatrième opération,
- la réception d'une quatrième entrée utilisateur par l'intermédiaire du terminal utilisateur (7), la quatrième entrée utilisateur indiquant une quatrième tâche d'opération à exécuter par un autre élément fonctionnel d'outil (12.2, 12.1) disposé sur l'outil (2) et différent de l'outil fonctionnel d'outil (12,1, 12,2) ;
- la réception de la quatrième entrée utilisateur dans l'unité de commande de tracteur (8) ;
- la génération, en réponse à la quatrième entrée utilisateur, de quatrièmes signaux d'entraînement par l'unité de commande de tracteur (8), les quatrièmes signaux de commande étant conçus pour commander le fonctionnement de l'autre élément fonctionnel d'outil (12.2, 12.1) afin d'exécuter la quatrième tâche d'opération ;
- la transmission, par l'intermédiaire d'un ensemble de bus de données, des quatrièmes signaux de commande de l'unité de commande de tracteur (8) à une autre unité locale d'entraînement (10.2, 10.1) disposée sur l'outil et associée à l'autre élément fonctionnel d'outil (12.2, 12,1) ;
- la génération, en réponse à la réception des quatrièmes signaux de commande, de signaux d'entraînement par l'autre unité locale d'entraînement (10.2, 10.1), les signaux d'entraînement étant conçus pour entraîner l'autre élément fonctionnel d'outil (12.2, 12.1) afin d'exécuter la quatrième tâche d'opération ; et
- l'application des signaux d'entraînement et, en réponse à l'application, l'exécution de la quatrième tâche d'opération par l'autre élément fonctionnel d'outil (12.2, 12.1).

12. Machine agricole, comprenant
- un tracteur ;
- un élément tracteur fonctionnel disposé sur le tracteur et conçu pour exécuter des tâches d'opération ;
- un outil traîné ou porté par le tracteur ;
- un élément fonctionnel d'outil (12.1 12.2) disposé sur l'outil et conçu pour exécuter des tâches d'opération ;
- un terminal utilisateur (7) disposé sur le tracteur ; et
- un système de commande de machine connecté au terminal utilisateur (7) et présentant
- une unité de commande de tracteur (8) disposée sur le tracteur et connectée au terminal utilisateur (7) ;
- une unité locale d'entraînement (10.1, 10.2) disposée sur l'outil et associée à l'élément fonctionnel d'outil (12.1, 12.2) ; et
- un ensemble de communication de données (6) connectant l'unité de commande de tracteur (8) et l'unité locale d'entraînement (10.1, 10.2) ;
dans lequel le système de commande de machine est conçu, dans une première opération, pour
- recevoir une première entrée utilisateur par l'intermédiaire du terminal utilisateur (7), la première entrée utilisateur indiquant une première tâche d'opération à exécuter par un élément fonctionnel d'outil (12.1 12.2) disposé sur l'outil (2) ;
- recevoir la première entrée utilisateur dans l'unité de commande de tracteur (8) ;
- générer, en réponse à la première entrée utilisateur, des premiers signaux d'entraînement par l'unité de commande de tracteur (8), les premiers signaux d'entraînement étant conçus pour entraîner le fonctionnement de l'élément fonctionnel d'outil (12.1, 12.2) afin d'exécuter la première tâche d'opération ;
- transmettre, par l'intermédiaire de l'ensemble de communication de données (6), les premiers signaux d'entraînement de l'unité de commande de tracteur (8) à une unité locale d'entraînement (10.1, 10.2) disposée sur l'outil (2) et associée à l'élément fonctionnel d'outil (12.1, 12,2) ; et
- entraîner, en réponse à la réception des premiers signaux de commande, l'élément fonctionnel d'outil (12.1, 12.2), l'entraînement étant effectué par l'unité locale d'entraînement (10.1, 10.2), et l'exécution de la première tâche d'opération par l'élément fonctionnel d'outil (12.1, 12.2).
